Europäisches Patentamt

European Patent Office

Office européen des brevets

(11) Publication number: **0 073 279**
**B1**

## (12) EUROPEAN PATENT SPECIFICATION

(45) Date of publication of patent specification: **13.11.85**

(21) Application number: **81303908.8**

(22) Date of filing: **26.08.81**

(51) Int. Cl.⁴: **B 60 R 21/04,** B 60 S 1/08

(54) Protective cover for cab-mounted windscreen wiper motor unit.

(43) Date of publication of application:
**09.03.83 Bulletin 83/10**

(45) Publication of the grant of the patent:
**13.11.85 Bulletin 85/46**

(84) Designated Contracting States:
**AT DE FR GB IT SE**

(56) References cited:
**DE-A-2 321 800**
**DE-B-2 605 169**
**US-A-2 765 951**

(73) Proprietor: **DEERE & COMPANY**
**1 John Deere Road**
**Moline Illinois 61265 (US)**

(72) Inventor: **Hauk, Klaus**
**Berliner Strasse 28**
**D-6701 Altrip (DE)**

(74) Representative: **Pears, David Ashley et al**
**REDDIE & GROSE 16 Theobalds Road**
**London WC1X 8PL (GB)**

Courier Press, Leamington Spa, England.

# Description

The present invention relates to a cab-mounted windscreen wiper motor unit with a protective cover fitted over the rear of the unit and attached thereto by fixing means engaging in threaded bores opening at the rear of the unit.

In private cars it is now customary to mount the windscreen wiper motor unit out of the way in the engine compartment. However, in many commercial vehicles, including tractors, it remains customary to mount the unit in the cab, normally at the top of the windscreen itself. In this position the unit presents a hazard in the event of an accident since the driver can easily strike his head against the unit. For this reason it is known to provide the unit with a protective cover. Indeed this may be a positive requirement imposed on the manufacturer by a code of conduct or legal provision. The cover provides protection firstly because it is given a smooth profile with well rounded corners and it is therefore much less angular than the motor unit over which it is fitted. In the second place, the cover is moulded from plastics material and it is more yielding than the motor unit.

In order to fit the cover to the motor unit it is known to provide two spaced, threaded bores in the rear of the motor unit, i.e. the face of the unit facing to the rear of the vehicle. The cover has two corresponding holes and is attached by screws through these holes screwed into the threaded bores. This known construction suffers from certain disadvantages. The screws interrupt the smooth profile of the cover and can cause cuts and abrasions in the event of an accident. They have to be removed when the cover is taken off for servicing and it is all too easy to lose the screws.

It is known in the automobile industry and in other arts to attach removable parts by various kinds of pegs pushed into corresponding apertures (e.g. US 2 765 951).

The object of the present invention is to provide a solution to the specific problem discussed above using a particularly advantageous application of attachment by pegs allowing the cover to be repeatedly removed and replaced for servicing the motor unit. The motor unit with a protective cover according to the invention is characterised in that the fixing means comprise integrally-moulded pegs projecting inside the cover, the pegs having a cross-shaped section and being a push fit into the bores.

The motor unit with a cover thus defined has a number of advantages. The problems mentioned above are overcome and there is a small saving in cost since the cover can be moulded with no significant increase in cost over the known cover and the expense of separate fixing devices is eliminated. Moreover the cover can easily be pulled off the motor unit for servicing and replaced simply by pushing it back on to the unit; no tools are required. Finally, no modification of the motor unit itself is required. The pegs are provided in correspondence with the existing threaded bores of the motor unit so that the fixing utilises these existing bores.

In particular there may by two pegs corresponding to the known two threaded bores in the motor unit. The motor unit commonly has two main parts, namely a cylindrical motor housing and a gear housing at one end of the motor housing. The shaft for the wiper blade projects out of the gear housing. In order to improve the location of the cover on such a motor unit it is preferred to provide at least one internal rib within the part of the cover corresponding to the cylindrical motor housing. This rib extends over more than 180° and grips the motor housing when the cover is fitted.

In order to ensure reliable retention of the pegs even after repeated removals of the cover, each peg is cross-shaped in section, so that the peg is formed from a plurality of longitudinal leaves radiating from the axis of the peg, where the leaves join. The end of each peg is preferably tapered to facilitate entry into the bore. The base on each peg is also preferably surrounded by a strengthening ring also moulded integrally with the cover. The ring prevents undue local stressing of the cover as the pegs are pushed into and pulled out from the bores.

The use of cross-shaped pegs overcomes another common problem which arises where parts in engagement with each other have different coefficients of expansion. The pegs are of plastics material and have a higher coefficient of thermal expansion than the metal of which the motor unit housing is customarily made. When the temperature rises, expansion of the pegs is accommodated by expansion of the leaves of the pegs into the thread grooves of the threaded bores. The pegs do not suffer any permanent deformation and remain effective for retaining the cover except when it is pulled off forcibly.

One embodiment of the invention will now be described by way of example with reference to the accompanying drawings, in which:

Fig. 1 is a rear elevation of a known windscreen wiper motor unit.

Fig. 2 is a right hand side elevation of the known unit.

Fig. 3 is a front elevation of the cover embodying the invention, i.e. a view looking into the interior of the cover.

Fig. 4 is a left hand side elevation of the cover.
Fig. 5 is a section on the line A—A of Fig. 3; and
Fig. 6 is a section on the line B—B of Fig. 3.

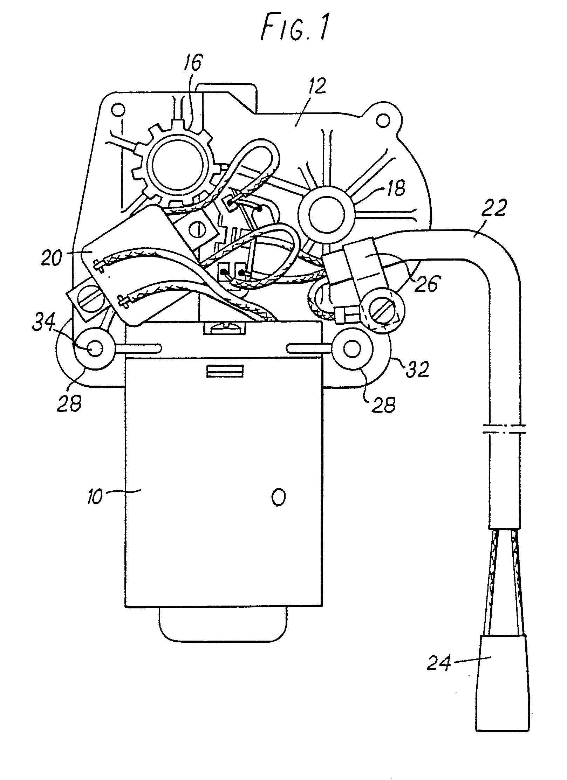

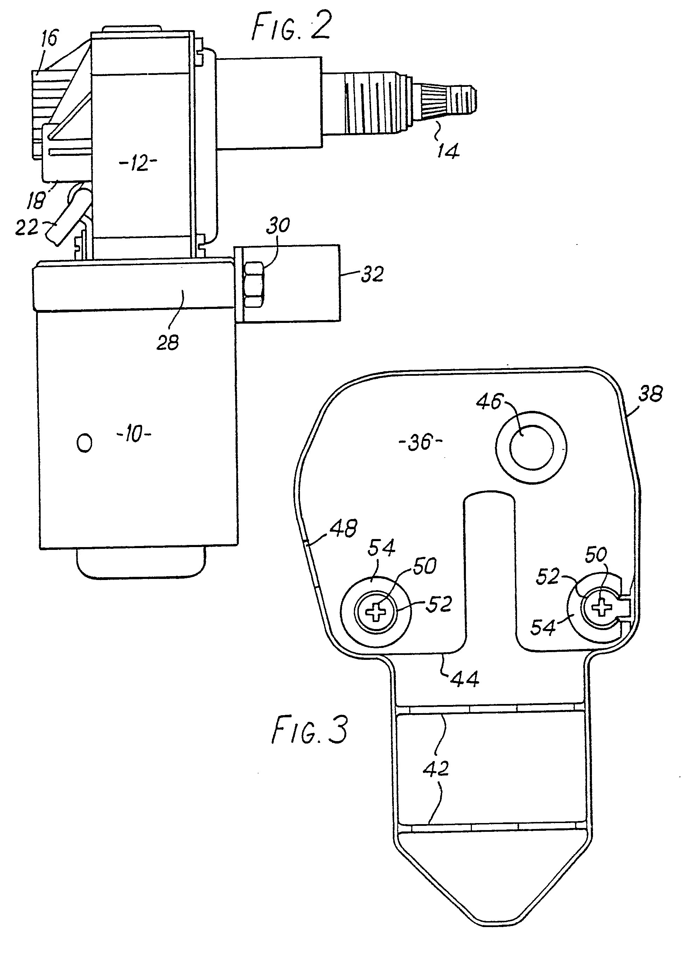

The windscreen wiper motor unit will be described only in outline to the extent necessary for an understanding of the present invention since this unit is known in itself. Referring to Fig. 1 and 2, the unit comprises cylindrical motor housing 10 depending from a gear housing 12 from the front of which projects the shaft 14 for the wiper blade. On the back of the gear housing 12 are formed a ribbed boss 16 jounalling the rear end of the shaft 14 and another ribbed boss 18 for the shaft of an intermediate gear in the housing 12. A suppressor capacitor 20 (not shown in Fig. 2) is also mounted on the back of the housing 12 and the cable 22 for the electrical connections to the motor from a connector 24 is retained on the back of the housing 12 by a cable clip 26.

The top of the cylindrical motor housing 10 is flanked by two stout parallel ribs 28 which have threaded bores at both ends. The threaded bores at the front ends receive bolts 30 attaching a mounting bracket 32 to the unit. The threaded bores 34 (Fig. 1) at the rear ends of the ribs 28 are provided for the fixing screws for a cover in accordance with the prior art. As will become apparent below, these bores 44 are used unmodified in accordance with the present invention to retain a cover without fixing screws.

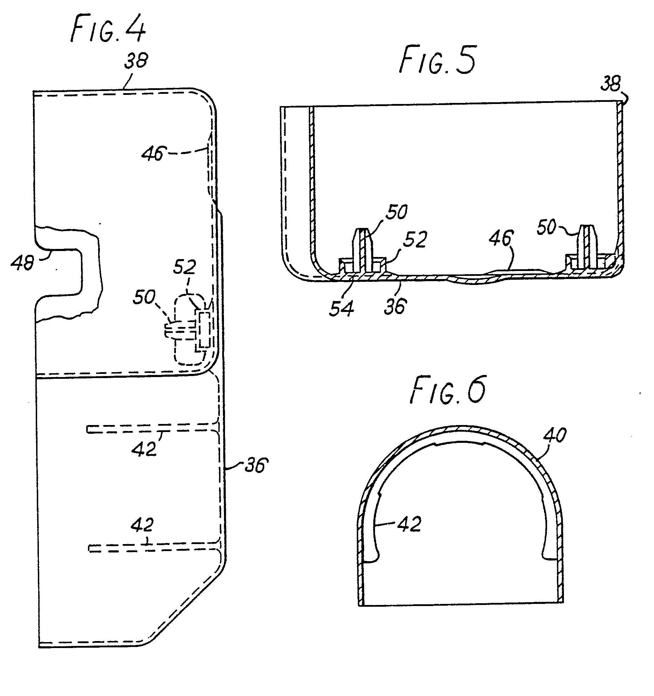

Turning to Figs. 3 to 6, the cover according to the invention essentially comprises a rear wall 36 and a peripheral skirt wall 38. At the bottom part of the cover these walls merge into one smooth U section wall 40 (Fig. 6) for enclosing the motor housing 10 of the motor unit. Inside this part of the cover there are two axially spaced circumferential ribs 42 which extend over somewhat more than 180° and which grip the cylindrical motor housing 10 when the cover is fitted.

This lower part of the cover merges into the upper part along a line 44 (Fig. 3) and the upper part is of box form for housing the gear casing 12 of the motor unit. The whole cover is open at the front so that it can be pushed over the motor unit from the rear. The top part of the cover has a slightly inwardly recessed pad 46 which bears against the shaft boss 16 in order to locate the top part of the cover. On the right hand side of the upper part of the cover (i.e. the left hand side in Fig. 3) the skirt wall 38 has a notch 48 to accommodate the cable 22.

Although the ribs 42 assist in holding the cover on the motor unit, the main means for fixing the cover will now be described with reference to Figs. 3, 4 and 5. In correspondence with the locations of the threaded bores 34 of Fig. 1 the cover has two integrally moulded pegs 50 projecting forwardly inside the cover, from the rear wall 36. Each peg has a cross section of a cross with a tapered leading end for the reasons discussed above. Moreover each peg is surrounded by a strenthening wall 52 also moulded integrally with the cover.

In order to fit the cover it is merely placed over the back of the motor unit so that the tapered ends of the pegs 50 enter the threaded bores 24. Thumb pressure is then applied over the locations of the two pegs, these locations being readily apparent from outside in that the rear wall 36 of the cover is slightly recessed as indicated at 54 at each peg position. The pegs press fully into bores 34 and are firmly retained therein, particularly as they come into interference with the screw threads. The strenghtening walls 52 telescope over the rear ends of the ribs 28 of the motor unit. Although the cover is firmly retained under all normal conditions of use it can be removed very simply by grasping the cover and pulling it firmly to the rear.

## Claims

1. A cab-mounted windscreen wiper motor unit with a protective cover (36, 38) fitted over the rear of the unit (10, 12) attached thereto by fixing means engaging in threaded bores (34) opening at the rear of the unit, characterised in that the fixing means comprise integrally-moulded pegs (50) projecting inside the cover, the pegs having a cross-shaped section and being a push fit into the bores (34).

2. A motor unit with protective cover according to claim 1, characterised in that there are two spaced, parallel pegs (50).

3. A motor unit with protective cover according to claim 1 or 2, characterised in that the base of each peg (50) is surrounded by an integrally moulded strengthening wall (52).

4. A motor unit with protective cover according to any of claims 1 to 3, characterised in that the cover comprises a part (40) enclosing a cylindrical motor housing (10) of the motor unit, and at least one internal rib (42) extending over more than 180° and gripping the cylindrical motor housing.

## Revendications

1. Bloc moteur d'essuie-glace monté sur une cabine de conduite, avec capot de protection (36, 38) adapté sur l'arrière du bloc (10, 12) et fixé sur celui-ci par des moyens de fixation s'engageant dans des perçages filetés (34) débouchant à l'arrière du bloc, caractérisé en ce que les moyens de fixation comportent des tétons venus de moulage (50), faisant saillie à l'intérieur du capot, ces tétons ayant une section droite cruciforme et pouvant être insérés à force dans les perçages (34).

2. Bloc moteur avec capot de protection suivant la revendication 1, caractérisé en ce qu'il est prévu deux tétons (50) parallèles écartés l'un de l'autre.

3. Bloc moteur avec capot de protection suivant la revendication 1 ou 2, caractérisé en ce que la base de chaque téton (50) est entourée par une paroi de reforcement (52) venue directement de moulage.

4. Bloc moteur avec capot de protection suivant l'une quelconque des revendications 1 à 3, caractérisé en ce que le capot comprend une partie (40) entourant un corps ou carter de moteur cylindrique (10) du bloc moteur, et au moins une nervure interne (42) s'étendant sur plus de 180° et enserrant le corps ou carter de moteur cylindrique.

## Patentansprüche

1. Am Fahrerhaus montierte Scheibenwischer-Motoreinheit mit einer Schutzabdeckung (36, 38), die über den rückwärtigen Teil der Einheit (10, 12) paßt und daran durch Befestigungsmittel angebracht ist, die in Gewindebohrungen (34) ein- greifen, welche nach der Rückseite der Einheit offen sind, dadurch gekennzeichnet, daß die Befestigungsmittel einstückig getormte Zapfen (50) sind, die in der Abdeckung vospringen und einen kreuzförmigen Querschnitt aufweisen und einen Schiebesitz in den Bohrungen (34) bilden.

2. Motoreinheit mit Schutzabdeckung nach Anspruch 1, dadurch gekennzeichnet, daß zwei parallele Zapfen (50) im Abstand vorgesehen sind.

3. Motoreinheit mit Schutzabdeckung nach Anspruch 1 oder 2, dadurch gekennzeichnet, daß die Basis jedes Zapfens (50) durch einen einstückig angeformte Verstärkungswand (52) umgeben ist.

4. Motoreinheit mit Schutzabdeckung nach irgend einem der Ansprüche 1 bis 3, dadurch gekennzeichnet, daß die Abdeckung einen Teil (40) umfaßt, der ein zylindrisches Motorgehäuse (10) der Motoreinheit einschließt und wenigstens eine innere Rippe (42), die sich über mehr als 180° erstreckt und das zylindrische Motorgehäuse umgreift.

FIG. 1

0 073 279

1

0 073 279

FIG. 2

FIG. 3

2

FIG.4

FIG.5

FIG.6